# EUROPÄISCHE PATENTSCHRIFT

(11) **EP 2 797 713 B1**
(45) Veröffentlichungstag und Bekanntmachung des Hinweises auf die Patenterteilung: **15.11.2017**
(21) Anmeldenummer: 12818788.7
(22) Anmeldetag: 28.12.2012
(51) Int. Cl.: B23Q 1/01

(54) **BEARBEITUNGSVORRICHTUNG FÜR ENDEN VON LANGPROFILABSCHNITTEN**
PROCESSING DEVICE FOR ENDS OF ELONGATE PROFILE SECTIONS
DISPOSITIF D'USINAGE POUR LES EXTRÉMITÉS DE SECTIONS PROFILÉES ALLONGÉES

(30) Priorität: 28.12.2011 DE 102011057093
(43) Veröffentlichungstag der Anmeldung: 05.11.2014
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2012/077041
(87) Internationale Veröffentlichungsnummer: WO 2013/098385

(56) Entgegenhaltungen:
- EP-A1- 0 659 520
- EP-A2- 1 193 027
- US-A- 5 127 140

## Beschreibung

Die Erfindung betrifft eine Bearbeitungsvorrichtung nach dem Oberbegriff des Anspruchs 1.

Bearbeitungsvorrichtungen für Langprofilabschnitte sind im Stand der Technik beispielsweise durch die DE 1 463 226 A bekannt.

Die bekannten Bearbeitungsvorrichtungen für Rohrabschnitte weisen eine Spannvorrichtung und ein Bearbeitungswerkzeug auf, die beide als separate Bauteile ausgebildet sind. Durch den vielteiligen und offenen Aufbau weisen die Bauteile unter Belastungen relativ zueinander ein Spiel auf. Das Spiel ist für hochpräzises Bearbeiten von Langprofilabschnitten zu groß.

Es ist daher Aufgabe der vorliegenden Erfindung, eine Bearbeitungsvorrichtung für Langprofilabschnitte zur Verfügung zu stellen, die gegenüber dem Stand der Technik eine höhere Präzision aufweist.

Aus der US 5,127,140 ist eine NC-gesteuerte Drehbank bekannt mit einem ersten und einem zweiten Spindelstock, die entlang einer gemeinsamen Achse gegeneinander verfahrbar sind.

Aus der EP 0 659 520 A1 ist eine Werkzeugmaschine mit einer Werkstückaufnahme sowie einem Werkzeugträger bekannt mit einem um eine Bearbeitungsachse rotierenden Bearbeitungswerkzeug, der um eine Schwenkachse, welche mit der Bearbeitungsachse einen positiven Neigungswinkel einschließt und die Umgebung des Bearbeitungswerkzeuges schneidet, schwenkbar ist, wobei der Neigungswinkel ein spitzer Winkel ist.

Im ersten Aspekt wird die Aufgabe durch eine Bearbeitungsvorrichtung mit den Merkmalen des Anspruchs 1 erfüllt.

Unter einem Langprofilabschnitt werden hier abgelängte Abschnitte von Langprofilen verstanden. Unter einem Langprofil werden Vollprofile, Hohlprofile verstanden, die einen beliebigen Querschnitt aufweisen, insbesondere auch Rohre. Vorzugsweise sind die Langprofile vollständig aus einem Metall, vorzugsweise aus Stahl ausgebildet.

Die erfindungsgemäße Bearbeitungsvorrichtung weist eine Spanneinrichtung zum Einspannen des Langprofilabschnitts und ein Bearbeitungswerkzeug zur Bearbeitung insbesondere des Endes des Langprofilabschnitts auf. Erfindungsgemäß ist ein zentrales Bauteil mit wenigstens einer ersten integrierten Führung für das Bearbeitungswerkzeug und wenigstens einer zweiten integrierten Führung für die Spanneinrichtung vorgesehen.

Durch die kompaktere und starrere Ausbildung der Bearbeitungsvorrichtung durch ein vorzugsweise einstückig ausgebildetes zentrales Bauteil mit in dem Bauteil integrierten Führungen können das Bearbeitungswerkzeug und die Spanneinrichtung gegenüber dem genannten Stand der Technik mit deutlich höherer Präzision gegeneinander verfahren werden.

Erfindungsgemäß ist die wenigstens eine Führung integral in eine erste Wandung des zentralen Bauteils eingeformt und die wenigstens eine zweite Führung integral in eine zweite Wandung des zentralen Bauteils eingeformt. Dabei können die erste und zweite Wandung in einem Winkel, vorzugsweise senkrecht zueinander angeordnet sein. Unter integral wird hier verstanden, dass die Führungen in das Material des zentralen Bauteils, beispielsweise durch Drahterodieren eingeformt sind und Führung und Bauteil einteilig ausgebildet sind. Durch die integrale Ausbildung der Führungen in der Wandung des einstückigen Bauteiles sind die Führungen auch unter Belastung relativ zueinander positionsstabil, und die beiden Werkzeuge, die Spanneinrichtung und das Bearbeitungswerkzeug können hochpräzise in ihrer relativen Bewegung zueinander verfahren werden.

Vorzugsweise ist die wenigstens eine erste Führung als formschlüssiger Feder-Nut-Eingriff ausgebildet. Günstigerweise ist die Nut entlang der ersten Wandung des zentralen Bauteils über die gesamte Längsausdehnung des zentralen Bauteils ausgebildet. Die Nut kann in einem Querschnitt senkrecht zur Längsrichtung rechteckig, aber auch trapezförmig oder andersförmig ausgebildet sein. Die Nut ist im Drahterodierverfahren herstellbar. In die Nut greift eine vom Bearbeitungswerkzeug abstehende Feder ein, die vorzugsweise ebenfalls über die gesamte Längsausdehnung des Bearbeitungswerkzeugs an dessen Unterseite verläuft und hochpräzise ausgeformt ist, beispielsweise ebenfalls durch Drahterodieren. Das Bearbeitungswerkzeug ist in der Führung zwar in Längsrichtung verfahrbar angeordnet, jedoch ist kein Spiel vorgesehen, so dass das Bearbeitungswerkzeug auch während des Bearbeitungsvorgangs des Langprofilabschnitts positionsstabil gegenüber dem zentralen Bauteil angeordnet bleibt.

In einer weiteren bevorzugten Ausführungsform der Erfindung weist die wenigstens eine zweite Führung zwei gegenläufig bewegliche Supporte auf. Die beiden Supporte können über jeweils einen Arm mit jeweils einer Spannbacke verbunden sein, die es im Zusammenwirken ermöglichen, den Langprofilabschnitt festzuspannen, um ihn dann einer Bearbeitung durch das Bearbeitungswerkzeug zuzuführen.

Vorzugsweise weisen die beiden Supporte auf sich zugewandten Außenwandungen ein Zahnprofil auf, das mit einem zwischen den beiden Supporten angeordneten Zahnrad mit korrespondierender Zahnung zusammenwirkt. Das Zahnrad kann durch Drehung die beiden Supporte über den Zahneingriff in entgegengesetzter Richtung antreiben. Dabei wird je nach Drehrichtung der eine Support in Verfahrrichtung und gleichzeitig der andere Support entgegen der Verfahrrichtung verfahren oder genau umgekehrt. Die Supporte sind durch den Antrieb des Zahnrades sehr exakt gegeneinander verfahrbar.

Günstigerweise weisen zur Erhöhung der Führungsstabilität in Verfahrrichtung Außenwandungen jeder der Supporte ein geriffeltes Profil zur Vergrößerung der Kontaktfläche mit den zweiten Führungen auf. Dabei ist das geriffelte Profil in Verfahrrichtung orientiert, beispielsweise im Querschnitt senkrecht zur Verfahrrichtung in Form eines Zickzack-Profils. Das geriffelte Profil kann auf allen Außenwandungen oder nur einigen Außenwandungen des Supportes vorgesehen sein. Der Support ist in einem Querschnitt senkrecht zur Verfahrrichtung, vorzugsweise über seine gesamte Ausdehnung in Verfahrrichtung, rechteckförmig oder quadratisch ausgebildet. Die zweiten Führungen weisen an ihrer Innenwandung ein korrespondierendes geriffeltes Profil auf.

Erste und zweite Führungen erstrecken sich vorzugsweise über die gesamte Ausdehnung der jeweiligen Wandung des zentralen Bauteils. Dadurch ist es möglich, die Führungen durch Drahterodieren in die Bauteilwandung des insbesondere metallischen Bauteils einzuformen.

Günstigerweise ist an jedem der beiden Supporte ein Arm mit einer Spannbacke angeordnet, durch deren Zusammenwirken der abgelängte Langprofilabschnitt positionsgenau zur Bearbeitung vor dem Bearbeitungswerkzeug positionierbar ist.

Vorzugsweise weist die Bearbeitungsvorrichtung eine Positionsbestimmungseinrichtung mit einem Abstandssensor auf.

Die Positionsbestimmungseinrichtung ist insbesondere zum Einbau, vorzugsweise zweifachen Einbau, in eine der obigen Bearbeitungsvorrichtungen bestimmt. Die Positionsbestimmungseinrichtung ist neben jedem der Supporte vorgesehen und zur Bestimmung der genauen Position der Supporte in Verfahrrichtung bestimmt.

Die Positionsbestimmungseinrichtung weist einen Abstandssensor mit einem in Messrichtung ausgerichteten Abtaststrahl auf, der auf eine in Verfahrrichtung schräge Messfläche ausgerichtet ist, und der Support, der quer, vorzugsweise senkrecht zur Messrichtung verfahrbar ist, weist eine glatte, in Verfahrrichtung schräg abfallende Messfläche auf. Während des Einspann- oder Freigabevorganges des Langprofilabschnitts wird der Support in Verfahrrichtung verfahren, und die Messfläche läuft entlang der Verfahrrichtung durch den Abtaststrahl des Abstandssensors hindurch. Weil die Messfläche gegenüber dem Abtaststrahl schräg gestellt ist, ändert sich der Abstand je nach Position des Supportes entlang der Verfahrrichtung zwischen dem Messpunkt auf der Messfläche und dem Abstandssensor. Aus dem unterschiedlichen Abstand zwischen Abstandssensor und Messpunkt auf der Messfläche kann auf die exakte Position des Supportes in Verfahrrichtung geschlossen werden. Durch diese exakte Positionsbestimmung des abgelängten Rohrabschnittes ist es möglich, das Bearbeitungswerkzeug während jedes Bearbeitungsvorganges hochpräzise zu bestimmen und eine hochpräzise Bearbeitung des Endes des Langprofilabschnitts beispielsweise durch Anfasen vorzunehmen.

Die Erfindung wird anhand eines Ausführungsbeispiels in vier Figuren beschrieben. Dabei zeigen:
- Fig. 1: eine perspektivische Ansicht der erfindungsgemäßen Bearbeitungsvorrichtung mit Bearbeitungswerkzeug und Spanneinrichtung,
- Fig. 2: eine perspektivische Rückansicht eines Teils der Spanneinrichtung der Bearbeitungsvorrichtung mit Positionsbestimmungseinrichtung in Fig. 1,
- Fig. 3: eine Rückansicht des Teils der Spanneinrichtung der Bearbeitungsvorrichtung mit Positionsbestimmungseinrichtung in Fig. 2,
- Fig. 4: ein Schnitt entlang der Linie IV-IV in Fig. 3.

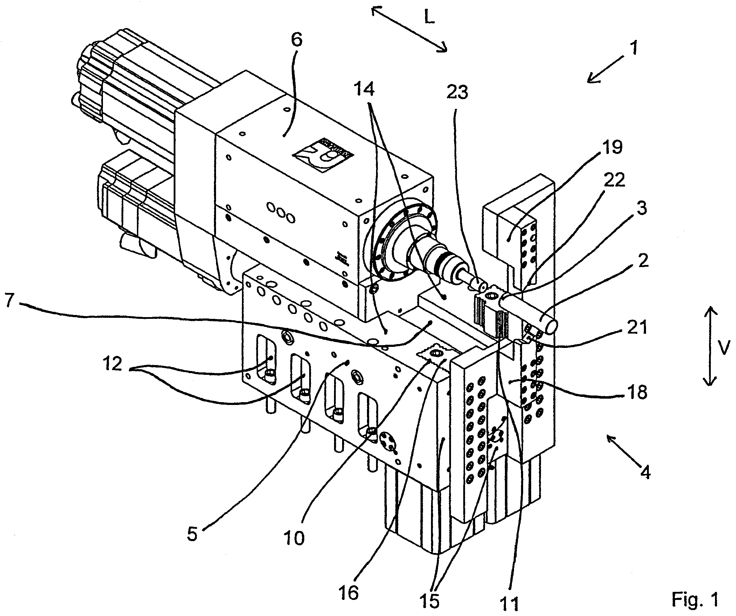

Die Zeichnungen sind nicht maßstabsgerecht. Fig. 1 zeigt die Bearbeitungsvorrichtung 1 als Teil einer Rohrsägemaschine. Die Rohrsägemaschine selbst ist in den Figuren nicht dargestellt. Rohrsägemaschinen ermöglichen es, von insbesondere Metallrohren als spezielle Form der Langprofile Abschnitte abzusägen, und die abgesägten Rohrabschnitte 2 können dann in der hier beanspruchten Bearbeitungsvorrichtung 1 an ihren Rohrabschnittsenden 3 weiterbearbeitet werden. Diese Weiterbearbeitung kann beispielsweise ein Anfasen entlang der Schnittfläche des abgelängten Rohrabschnitts 2 sein. Die Rohrabschnitte 2 müssen mit der hinreichenden Präzision im µm Bereich bearbeitet werden.

Zur Erzielung dieser präzisen Bearbeitung der Rohrabschnittsenden 3 muss der Rohrabschnitt 2 hochpräzise mittels einer Spanneinrichtung 4 eingespannt werden und ein Bearbeitungswerkzeug 6 relativ zur Spanneinrichtung 4 hochpräzise zum eingespannten Rohrabschnitt 2 verfahren werden. Die erfindungsgemäße Bearbeitungseinrichtung 1 erzielt ihre hohe Präzision dadurch, dass eine erste Führung 7 des Bearbeitungswerkzeugs 6 und zweite Führungen 10, 11 der Spanneinrichtung 4 integral in demselben zentralen Bauteil, das vorzugsweise als Metallblock 5 ausgebildet ist, eingeformt sind. Es sind aber auch andere Materialien denkbar.

Der Metallblock 5 ist hier quaderförmig mit seitlichen Aussparungen 12 ausgebildet, wobei an der in Fig. 1 oberen Wandung 14 eine im Querschnitt senkrecht zur Längsrichtung L rechteckförmige, über die Längsrichtung L der Wandung 14 verlaufende, als Führung 7 ausgebildete Nut in die obere Wandung 14 integral eingeformt ist. Die Führung 7 ist in dem der Spanneinrichtung 4 benachbarten Abschnitt schmal ausgebildet, d. h. sie weist weniger als 1/3 der Breite des Bearbeitungswerkzeugs 6 auf.

In die in Fig. 1 rechts vordere, d. h. während der Bearbeitung dem eingespannten Rohrabschnitt 2 zugewandten Wandung 15 des Metallblocks 5 sind senkrecht zur ersten in Längsrichtung L verlaufenden Führung 7 zwei zweite in Verfahrrichtung V verlaufende Führungen 10, 11 vorgesehen, die zum einen im rechten Winkel zur wie auch rechts und links von der ersten Führung 7 angeordnet. Die beiden Führungen 10, 11 sind in eine vordere, dem Spannwerkzeug 4 zugewandte, vordere Wandung 15 des Metallblocks 5 eingeformt. Die beiden zweiten Führungen 10, 11 sind entlang ihrer Führungswandung innenseitig mit einem in Verfahrrichtung V ausgerichteten Innenprofil versehen. Das in Verfahrrichtung V ausgerichtete Innenprofil ist im Querschnitt senkrecht zur Verfahrrichtung V geriffelt. Das Innenprofil der beiden zweiten Führungen 10, 11 dient zur Vergrößerung der Kontaktfläche zwischen den beiden zweiten Führungen 10, 11 und zur Vergrößerung der in die beiden Führungen 10, 11 eingelassenen, ebenfalls mit einer korrespondierend ausgebildeten Riffelung versehenen Supporte 16, 17.

Die beiden Supporte 16, 17 werden zum Einspannen des abgesägten metallischen Rohrabschnitts 2 gleichzeitig gegenläufig verfahren. Von jedem der beiden Supporte 16, 17 geht ein linker bzw. rechter Spannarm 18, 19 mit jeweils einer Spannbacke 21, 22 ab. Der in Fig. 1 linke Support 16 weist eine im Spannzustand unterhalb, d. h. dem Erdboden zugewandt, des abgelängten Rohrabschnitts 2 vorgesehene Spannbacke 21 auf, während der in Fig. 1 rechte Support 17 eine oberhalb des abgelängten Rohrabschnitts 2 angeordnete Spannbacke 22 aufweist. Die beiden Spannbacken 21, 22 sind an Enden der beiden von den Supporten 16, 17 abgehenden linken bzw. rechten Spannarmen 18, 19 angeordnet, und sie behalten auch unter Belastung ihre relative Position zu den Supporten 16, 17 bei.

Das Bearbeitungswerkzeug 6 ist senkrecht zur Verfahrrichtung V in Längsrichtung L hin und her verfahrbar und weist einen Aufsatz 23 für das hier nicht eingezeichnete Anfaswerkzeug auf. Das Bearbeitungswerkzeug 6 führt eine Rotationsbewegung durch. Der abgelängte Rohrabschnitt 2 wird zentriert vor dem Bearbeitungswerkzeug 6 mittels der Spannbacken 21, 22 gehalten, und das Bearbeitungswerkzeug 6 kann dann entlang der ersten Führung 7 hochpräzise zum abgelängten Rohrabschnitt 2 in Längsrichtung L verfahren werden.

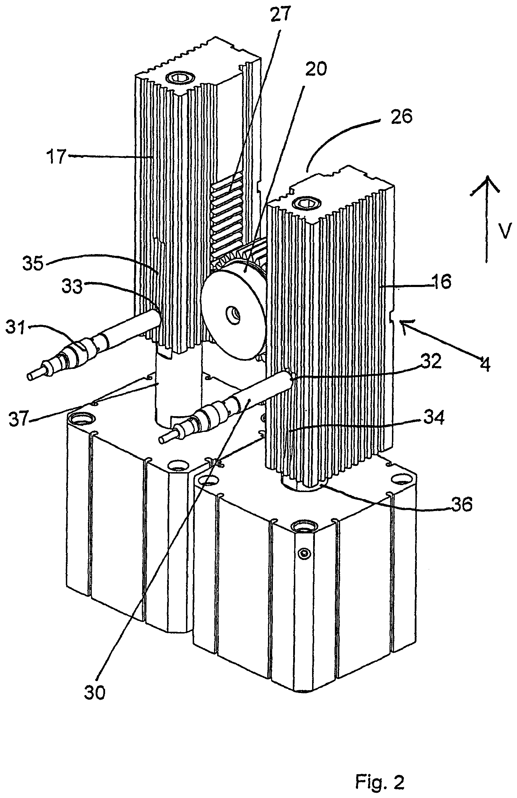

Fig. 2 zeigt die Spanneinrichtung 4 der Fig. 1 in einer separaten Darstellung ohne Metallblock 5 und ohne die beiden Spannarme 18, 19. Dazu sind die beiden Supporte 16, 17 aus den zweiten Führungen 10, 11 herausgenommen, behalten jedoch ihre relative Lage zueinander gemäß der Fig. 1 bei. Der Antrieb der beiden Supporte 16, 17 erfolgt jeweils über einen linken Zylinder 36 bzw. einen rechten Zylinder 37. Beide Supporte 16, 17 weisen ein stangenförmiges Zahnprofil 26, 27 auf, das jeweils an einer dem anderen Support 16, 17 zugewandten Innenwandung des Supportes 16, 17 entlang der Verfahrrichtung V vorgesehen ist. Die beiden Zahnprofile 26, 27 wirken mit Zähnen eines zwischen den beiden Supporten 16, 17 drehbar angeordneten Zahnrades 20 zusammen. Das Zahnrad 20 führt die beiden Supporte 16, 17 und präzisiert ihre Relativstellung.

In Fig. 2 wird durch Antrieb der Zylinder 36, 37 der Rohrabschnitt 2 eingespannt, indem die beiden Spannbacken 21, 22 aufweisenden Spannarme 18, 19 aufeinander zu verfahren werden, bis die beiden Spannbacken 21, 22 auf der Außenfläche des Rohrabschnitts 2 fest aufliegen. Das Rohrabschnittsende 3 des eingespannten Rohrabschnitts 2 wird mittels des Bearbeitungswerkzeugs 6 bearbeitet. Durch entgegengesetzen Antrieb der Zylinder 36, 37 werden die beiden Supporte 16, 17 wieder voneinander weg verfahren, d. h. der linke Support 16 bewegt sich nach oben und der rechte Support 17 nach unten, und die beiden Spannbacken 21, 22 werden voneinander weg verfahren, und der bearbeitete Rohrabschnitt 2 wird freigegeben und weiterbefördert.

In Fig. 2 sind auch zwei baugleiche erfindungsgemäße Positionsbestimmungseinrichtungen 30, 31 eingezeichnet. In dem Metallblock 5 der Fig. 1 ist für jeden der beiden Supporte 16, 17 eine zugehörige Positionsbestimmungseinrichtung 30, 31 mit jeweils einem Abstandssensor 32, 33 vorgesehen. Der linke Abstandssensor 32 ist mit seiner in Längsrichtung L ausgerichteten Messrichtung auf eine linke Messfläche 34 des linken Supports 16 ausgerichtet. Der linke Abstandssensor 32 hat einen Messbereich in Messrichtung von 0,5 mm bis 1,5 mm mit einer Genauigkeit im oder unterhalb des µm Bereiches. Das gilt analog für die rechte Seite.

Jeder der beiden Supporte 16, 17 weist eine in Verfahrrichtung V des Supportes 16, 17 schräg angeordnete und abfallende Messfläche 34, 35 auf, die während der Bewegung in Verfahrrichtung V durch den Messbereich jeder der beiden Abstandssensoren 32, 33 verfahren wird. Durch die schräge Anordnung der Messflächen 34 35 verändert sich der Abstand zwischen Abstandssensor 32, 33 und einem Messpunkt auf der jeweiligen Messfläche 34, 35 je nach Stellung der Supporte 16, 17 in Verfahrrichtung V. Anhand des Abstands kann auf die exakte Position jeder der beiden Supporte 16, 17 entlang der Verfahrrichtung V geschlossen werden. Die Abstandssensoren 32, 33 sind hier induktive Messsensoren.

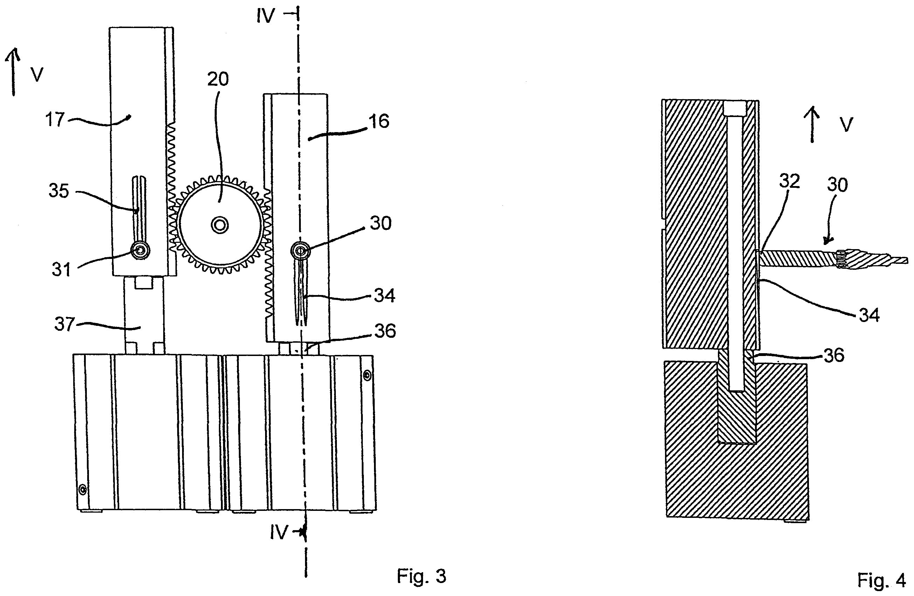

Fig. 3 und Fig. 4 zeigen die Anordnung der Positionsbestimmungseinrichtungen 30, 31 noch einmal schematisch in einer exakt rückwärtigen Ansicht, d. h. in Fig. 1 von hinten links. Der in Fig. 2 dargestellte linke Support 16 ist vollständig in den Metallblock 5 eingefahren, während der in Fig. 2 rechte Support 17 maximal aus dem Metallblock 5 herausgefahren ist. Die beiden Supporte 16, 17 werden von einem Zahnrad 20 geführt, so dass ihre Relativstellung hochpräzise, d. h. im µm-Bereich bestimmt ist. Angetrieben werden die beiden Supporte 16, 17 von ihnen zugeordneten Zylindern 36, 37. Der rechte Support 17 wird von einem rechten Zylinder 37 und der linke Support 16 von einem linken Zylinder 36 angetrieben (die Bezeichnungen 'rechts' und 'links' beziehen sich dabei weiterhin auf die Ansicht gemäß Fig. 1).

In der Stellung gemäß Fig. 2 und Fig. 1 ist das Spanneinrichtung 4 gelöst und bereit zur Aufnahme eines abgelängten Rohrabschnitts 2. Zum Einspannen des Rohrabschnitts 2 werden die beiden Supporte 16, 17 in bzw. entgegen der Verfahrrichtung V verfahren; der Support 16 in Verfahrrichtung V nach oben und der Support 17 entgegen der Verfahrrichtung V nach unten. Dadurch werden die beiden (nicht eingezeichneten) Spannbacken 21, 22 aufeinander zu verfahren und der abgelängte Rohrabschnitt 2 eingespannt.

Die Positionsbestimmungseinrichtungen 30, 31 sind auf die schrägen Messflächen 34, 35 gerichtet.

Fig. 4 zeigt die Anordnung der Fig. 3 in einem Schnitt entlang der Linie IV-IV. Zu erkennen ist die gegenüber der Verfahrrichtung V schräge Messfläche 34. Der Abstandssensor 32 hat einen Messbereich von 0,5 mm bis 1,5 mm, entsprechend ist die Schräge der Messfläche 34 ausgebildet.

### Bezugszeichen

- 1: Bearbeitungsvorrichtung
- 2: abgesägter Rohrabschnitt
- 3: Rohrabschnittsenden
- 4: Spanneinrichtung
- 5: Metallblock, zentrales Bauteil
- 6: Bearbeitungswerkzeug
- 7: erste Führung

- 10: zweite Führung
- 11: zweite Führung
- 12: Aussparungen

- 14: obere Wandung
- 15: vordere Wandung
- 16: Support links
- 17: Support rechts
- 18: Spannarm links
- 19: Spannarm rechts

- 20: Zahnrad
- 21: Spannbacke
- 22: Spannbacke
- 23: Aufsatz

- 26: Zahnprofil
- 27: Zahnprofil

- 30: linke Positionsbestimmungseinrichtung
- 31: rechte Positionsbestimmungseirichtung
- 32: linker Abstandssensor
- 33: rechter Abstandssensor
- 34: linke Messfläche
- 35: rechte Messfläche
- 36: Zylinder links
- 37: Zylinder rechts

- L: Längsrichtung

- V: Verfahrrichtung

## Patentansprüche

1. Bearbeitungsvorrichtung (1) für Langprofilabschnitte (2) mit
einer Spanneinrichtung (4), mit der der Langprofilabschnitt (2) positionsstabil fixierbar ist und
einem Bearbeitungswerkzeug (6), mit dem der fixierte Langprofilabschnitt (2) bearbeitbar ist,
einem zentralen Bauteil (5) mit wenigstens einer ersten integrierten Führung (7) für das Bearbeitungswerkzeug (6) und
wenigstens einer zweiten integrierten Führung (10,11) für die Spanneinrichtung (4) und wobei das zentrale Bauteil (5) einstückig ausgebildet ist, **dadurch gekennzeichnet, dass** die wenigstens eine Führung (7) integral in eine erste Wandung (14) des Bauteil (5) eingeformt ist und die wenigstens eine zweite Führung (10, 11) integral in eine zweite Wandung (15) des Bauteils (5) eingeformt ist und wobei die zweite Führung (10, 11) zwei gegenläufig bewegliche Supporte (16, 17) umfasst und die den beiden Supporten (16,17) zugewandten Außenwandungen ein Zahnprofil (26, 27) aufweisen, das mit einem zwischen den beiden Supporten (16, 17) angeordneten Zahnrad (20) zusammenwirkt, das durch Drehung die beiden Supporte (16, 17) über den Zahneingriff führt.

2. Bearbeitungsvorrichtung (1) nach Anspruch 1,
**dadurch gekennzeichnet, dass** die erste wenigstens eine Führung (7) als formschlüssiger Feder-Nut-Eingriff ausgebildet ist.

3. Bearbeitungsvorrichtung (1) nach einem der Ansprüche 1 oder 2,
**dadurch gekennzeichnet, dass** Außenwandungen des Supports (16, 17) ein geriffeltes Profil zur Vergrößerung der Kontaktfläche mit der wenigstens einen zweiten Führung (10, 11) aufweisen.

4. Bearbeitungsvorrichtung (1) nach einem der Ansprüche 1 bis 3,
**dadurch gekennzeichnet, dass** an jedem der beiden Supporte (16, 17) eine Spannbacke (21, 22) angeordnet ist, durch deren Zusammenwirken der Langprofilabschnitt (2) positionsgenau zur Bearbeitung durch das Bearbeitungswerkzeug (6) fixierbar ist.

5. Bearbeitungsvorrichtung nach einem der Ansprüche 1 bis 4,
**gekennzeichnet durch** einen Abstandssensor (32, 33), der in Messrichtung auf eine Messfläche (34, 35) ausgerichtet ist und einen Support (16, 17), der quer zur Messrichtung in Verfahrrichtumg (V) verfahrbar ist und **dadurch, dass** die Messfläche (34, 35) in Verfahrrichtung (V) schräg abfallend ausgebildet ist.

6. Bearbeitungsvorrichtung nach Anspruch 5,
**dadurch gekennzeichnet, dass** je nach anderer Stellung des Supportes (16, 17) in Verfahrrichtung (V) auch ein jeweils anderer Abstand zwischen Abstandssensor (32, 33) und Messfläche (34, 35) vorzufinden ist.

## Claims

1. A machining apparatus (1) for elongate profile sections (2) with
a clamping device (4) by which the elongate profile section (2) is capable of being fixed so as to be stable in position and
a machining tool (6) by which the fixed elongate profile (2) is capable of being machined,
a central component (5) with at least one first integrated guide (7) for the machining tool (6) and
at least one second integrated guide (10, 11) for the clamping device (4) and whereby the central component (5) is designed in one piece **characterized in that** the at least one guide (7) is formed in an integral manner in a first wall (14) of the component (5) and the at least one second guide (10, 11) is formed in an integral manner in a second wall (15) of the component (5) and whereby a machining apparatus (1) according to Claim 1, 2 or 3, **characterized in that** the second guide (10, 11) comprises two supports (16, 17) movable in opposite directions and the outer walls facing the two supports (16, 17) have a serrated profile (26, 27) which co-operates with a toothed wheel (20) which is arranged between the two supports (16, 17) and which, as a result of rotation, guides the two supports (16, 17) by way of the tooth engagement.

2. A machining apparatus (1) according to Claim 1 or 2, **characterized in that** the first at least one guide (7) is designed in the form of a tongue-and-groove engagement with positive locking.

3. A machining apparatus (1) according to any one of Claims 1 to 5, **characterized in that** outer walls of the support (16, 17) have a corrugated profile to increase the contact face with the at least one second guide (10, 11).

4. A machining apparatus (1) according to any one of Claims 1 to 6, **characterized in that** each of the two supports (16, 17) has arranged on it a clamping jaw (21, 22), by the cooperation of which the elongate profile section (2) is capable of being fixed in the precise position for machining by the machining tool (6).

5. A position-determining device (30, 31) for a machining apparatus according to any one of Claims 1 to 7, with a distance sensor (32, 33) which is orientated in a measurement direction towards a measurement face (34, 35), and with a support (16, 17), which is capable of being moved transversely to the measurement direction in the direction of travel (V), and the measurement face (34, 35) is designed so as to slope obliquely in the direction of travel (V).

6. A position-determining device (30, 31) according to Claim 8, **characterized in that** depending upon another position of the support (16, 17) in the direction of travel (V) another distance in each case can also be found between the distance sensor (32, 33) and the measurement face (34, 35).

## Revendications

1. Dispositif d'usinage (1) pour des sections de profils longitudinaux (2) avec
un dispositif de serrage (4) avec lequel la section de profil longitudinal (2) peut être fixée avec une position stable et
un outil d'usinage (6) avec lequel la section de profil longitudinal fixée (2) peut être usinée,
un composant central (5) avec au moins un premier guidage intégré (7) pour l'outil d'usinage (6) et
au moins un second guidage intégré (10, 11) pour le dispositif de serrage (4) et cependant que le composant central (5) est configuré en une pièce,
**caractérisé en ce que** le guidage qui existe au moins (7) est moulé en une pièce dans une première paroi (14) du composant (5) et que le second guidage qui existe au moins (10, 11) est moulé en une pièce dans une seconde paroi (15) du composant (5) et cependant que le second guidage (10, 11) comprend deux supports mobiles en sens contraire (16, 17) et que les parois extérieures tournées vers les deux supports (16, 17) présentent un profil denté (26, 27) qui coopère avec une roue dentée (20) placée entre les deux supports (16, 17) qui guide par rotation les deux supports (16, 17) par l'engrènement.

2. Outil d'usinage (1) selon la revendication 1, **caractérisé en ce que** le premier guidage qui existe au moins (7) est configuré comme un engrènement positif à rainure et languette.

3. Outil d'usinage (1) selon l'une des revendications 1 ou 2, **caractérisé en ce que** des parois extérieures du support (16, 17) présentent un profil cannelé pour augmenter la surface de contact avec le second guidage qui existe au moins (10, 11).

4. Outil d'usinage (1) selon l'une des revendications 1 à 3, **caractérisé en ce qu'**une mâchoire de serrage (21, 22) est placée sur chacun des deux supports (16, 17), mâchoires de serrage grâce à la coopération desquelles la section de profil longitudinal (2) peut être fixée avec une position précise pour l'usinage par l'outil d'usinage (6).

5. Outil d'usinage (1) selon l'une des revendications 1 à 4, **caractérisé par** un capteur de distance (32, 33) qui est orienté dans le sens de mesure sur une surface de mesure (34, 35) et par un support (16, 17) qui est déplaçable transversalement par rapport au sens de mesure dans la direction de déplacement (V) et par le fait que la surface de mesure (34, 35) est configurée inclinée obliquement dans la direction de déplacement.

6. Outil d'usinage selon la revendication 5, **caractérisé en ce que** selon une autre position du support (16, 17) dans la direction de déplacement (V) une distance respectivement autre doit également être trouvée entre le capteur de distance (32, 33) et la surface de mesure (34, 35).
